Europäisches Patentamt

European Patent Office

Office européen des brevets

(11) Veröffentlichungsnummer: **0 284 077**

**A1**

## (12) EUROPÄISCHE PATENTANMELDUNG

(21) Anmeldenummer: **88104769.0**

(22) Anmeldetag: **24.03.88**

(51) Int. Cl.4: **H04R 29/00**

(30) Priorität: **24.03.87 DE 3709556**

(43) Veröffentlichungstag der Anmeldung:
**28.09.88 Patentblatt 88/39**

(84) Benannte Vertragsstaaten:
**AT CH FR GB IT LI**

(71) Anmelder: **Scherer, Paul, Dr.-Ing.**
**Hundertsweg 16**
**D-5100 Aachen-Friesenrath(DE)**

(72) Erfinder: **Scherer, Paul, Dr.-Ing.**
**Hundertsweg 16**
**D-5100 Aachen-Friesenrath(DE)**

(74) Vertreter: **Haft, Berngruber, Czybulka**
**Postfach 14 02 46 Hans-Sachs-Strasse 5**
**D-8000 München 5(DE)**

(54) **Verfahren und Vorrichtung zur Bestimmung der linearen Verzerrungen einer elektroakustischen Übertragungsstrecke.**

(57) Es wird ein Verfahren und eine Vorrichtung für die Messung der Übertragungsqualität von elektroakustischen Übertragungsstrecken, insbesondere von Lautsprechern vorgestellt. Hierzu wird der elektroakustische Übertragungsstrecke ein Modellsignal zugeführt, das neben einer Grundwelle geradzahlige und ungeradzahlige Harmonische enthält. Nach entsprechender Anpassung des Pegels des Ausgangssignals an den des Modellsignals wird deren Differenz gebildet, wobei aus dieser Differenzfunktion, dem sogenannten Formpegel, ein Maß für die Übertragungsqualität der elektroakustischen Übertragungsstrecke abgeleitet werden kann.

Messaufbau zur Bestimmung des Formpegels und klassischer Daten bei stationären und nichtstationären Signalen

Fig. 9

EP 0 284 077 A1

## Verfahren und Vorrichtung zur Bestimmung der linearen Verzerrungen einer elektroakustischen Übertragungsstrecke.

Derartige Verfahren und Vorrichtungen sollen insbesondere zur Ermittlung der Wiedergabequalität von Lautsprechern dienen.

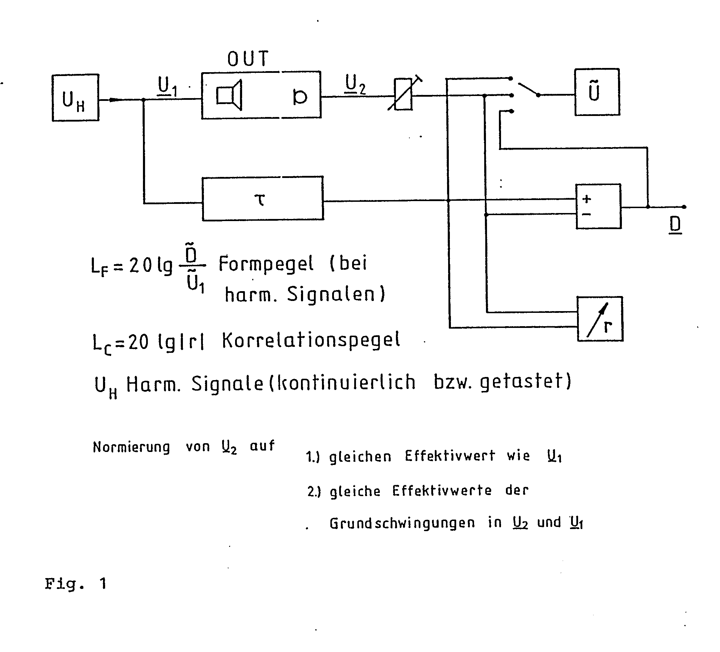

Beim jetzigen Stand der Technik ist eine exakte Beurteilung der Lautsprecherwiedergabequalität aus den üblichen Meßdaten, z. B. den Amplitudenfrequenzgängen nicht möglich. Aus diesem Grunde müssen außer den Messungen auch umfrangreiche Hörtests zur Beurteilung der Lautsprecher gemacht werden, wobei die starke Abhängigkeit der subjektiven Beurteilung vom Testmaterial in Kauf genommen werden muß. Diese Hörtests /1/ sind deswegen sehr zeitraubend und von der Erfahrung des Testleiters abhängig. Ein weiterer Mangel besteht darin, daß man aus dem Testergebnis keine Schlüsse zur konstruktiven Verbesserung ziehen kann. Um zu sagen, durch welche Maßnahmen und in welchem Frequenzbereich eine Verbesserung der Wiedergabe notwenig und möglich ist, ist man auf langjährige Erfahrungen mit anderen Lautsprechern sowie auf Probieren angewiesen. Man findet deswegen in der Literatur Hinweise z.B. über die Wichtigkeit der linearen Phasenübertragung, aber keinen praktikablen Meßvorschlag. Oft erhält man richtige Hinweise mit falscher Interpretation /2/, z.B. daß die Qualität der Wiedergabe steigt mit Verkleinerung der Grundresonanz. Dies jedoch nicht wegen der besseren Tiefenwiedergabe um 50 Hz /2/, sondern wegen der bei tieferer Resonanzfrequenz besseren Phasenwiedergabe bei 200 bis 500 Hz. Unter Berücksichtigung der Tatsache, daß manche Lautsprecher trotz gleichen Amplitudenfrequenzgangs unterschiedlich klingen, wurde in /3/ vorgeschlagen, die lineare Abweichung, die eine Dreiecksfunktion bei der Abstrahlung erleidet, als Maß für die Veränderung der natürlichen Qualität eines Lautsprechers anzusehen. Diese Abweichungen werden gleichermaßen sowohl durch lineare Verzerrungen der Amplituden und der Phasen der Teilschwingungen der dreieckförmigen Signal funktion bewirkt. Als Meßzahl wurde der Formänderungspegel oder Formpegel $L_F$ definiert; er ist der Pegel des Differenzsignals D zwischen dem Eingangs-und Ausgangssignal, bezogen auf den Pegel des Eingangssignals, wobei der Effektivwert des Ausgangssignals vorher auf den Effektivwert des Eingangssignals bezogen wird (Fig. 1). Der Formpegel kann aufgefaßt werden als der Pegel des notwendigen Korrektursignals, welches die "Übertragungsschäden" beseitigt /3/.

Der Formpegel $L_F$ hängt naturgemäß vom verwendeten harmonischen Meßsignal ab. Ein dreieckförmiges Meßsignal liefert Meßwerte, die nur für ähnliche natürliche Signale, z.B. für Klänge von Streichinstrumenten "passend" sind.

Aufgabe der Erfindung ist es, ein Verfahren und eine Vorrichtung zu entwickeln, durch welche sich die subjektiven Rangfolgen, die verschiedene Lautsprecher im Hörtest mit natürlichen Signalen bezüglich einer bestimmten Wiedergabequalität haben, berechnen lassen. Darüber hinaus sollte man in der Lage sein, anhand der Meßdaten Maßnahmen zu planen, durch die die Wiedergabequalität gezielt verbessert werden kann.

Diese Aufgabe wird gemäß der Erfindung durch die Merkmale in den kennzeichnenden Teilen der unabhängigen Patentansprüche erreicht.

Demgemäß ist wesentlicher Punkt der Erfindung die richtige Wahl eines harmonischen Meßsignals, das aus Grundwelle, aus quadratischen und auch aus kubischen Harmonischen besteht und der Auswertung dieses Meßsignals.

Bei der Bestimmung des Formpegels $L_F$ erfolgt die Normierung des Ausgangssignales $\underline{U}_2$ besser nicht auf den gleichen Effektivwert des Eingangssignals $\underline{U}_1$, sondern so, daß $\underline{U}_2$ so verändert wird, daß die in $\underline{U}_2$ enthaltene Grundschwingung die gleiche Amplitude wie die Grundschwingung in $\underline{U}_1$ bekommt. Diese letztere Art ergibt kritischere Werte, die zudem mit dem Hörvergleich bessere Übereinstimmung liefern.

Es ist bekannt, daß außer dem Amplitudengang auch das Phasenverhalten bei der Wiedergabe harmonischer Klänge eine wichtige Rolle spielt. Von daher erscheint der Ansatz, die Verfälschung der Zeitfunktion mit dem Formpegel zu messen, sinnvoll, vorausgesetzt, es läßt sich eine passende Signalfunktion finden. Sie sollte so gewählt werden, daß sie möglichst vielen natürlichen Signalen - z.B. der menschlichen Stimme, dem Klang eines Flügels, von Streichinstrument - nicht unähnlich ist. Das Problem der Auswahl besteht darin, daß bekanntermaßen Lautsprecher auf unterschiedliche Signale unterschiedlich reagieren, so daß das Ergebnis eines Hörtests auch von der Wahl der Testsignale /1/, /2/ abhängt. In der Praxis der Hörtests versucht man dies durch Verwednung unterschiedlicher Musikbeispiele mit unterschiedlicher Instrumentation aus verschiedenen Stilepochen auszugleichen. Indessen kann man bei willkürlicher Mittelung nicht sicher sein, einen wirklich repräsentativen Querschnitt getroffen zu haben. Außerdem weiß man nie, welche Stelle eines zu langen Musikbeispiels die Hörpersonen zum Vergleich heranziehen.

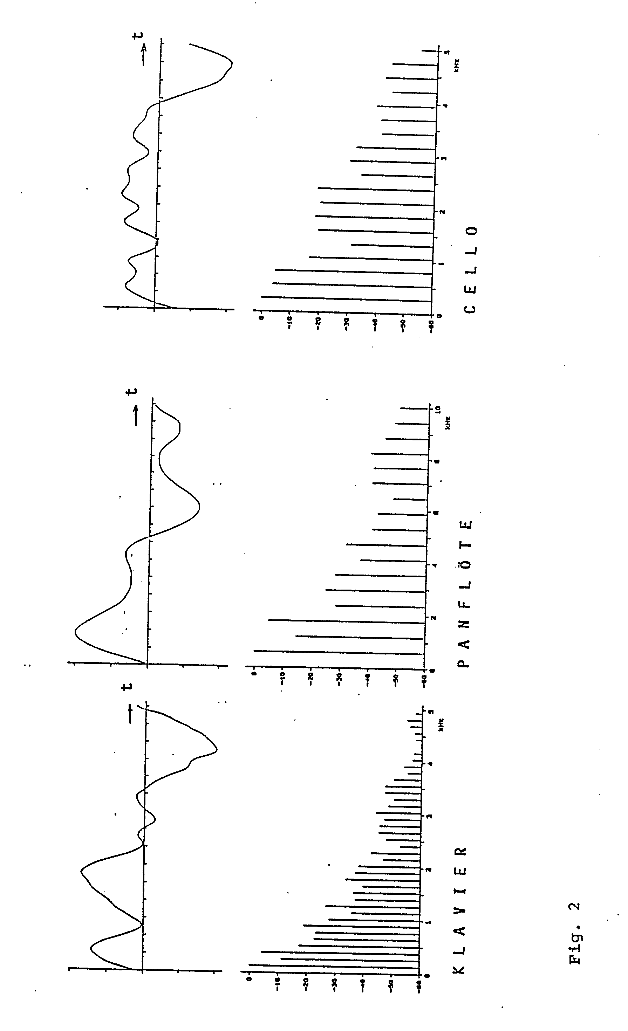

Eine ähnliche Schwierigkeit besteht natürlich auch in der Auswahl von künstlichen Testsignalen. Ein Testsignal als Modellfunktion sollte das Wesentliche natürlicher harmonischer Siganle erfassen, ohne dabei ein bestimmtes Natursignal synthetisieren zu wollen; es muß also gerad-und ungeradzahlige Harmonische enthalten, weil diese unterschiedlich gehört werden. Geradzahlige Harmonische bedingen z.B. eine Unsymmetrie bezüglich der t-Achse, die - je nach "Polung"-unterschiedlich gehört werden /4/. Ungeradzahlige Harmonische verändern den Klangeindruck in anderer - und auffälligerer - Weise. Ein Meßsignal muß deswegen beide Arten enthalten, neben der Grundfre quenz ω mindestens also 2ω und 3ω, um die grundsätzliche Erscheinung natürlicher harmonischer Signale erfassen zu können. Andererseits muß dann das Meßsignal - dessen Amplituden-und Phasengangsschicksal durch einen Prüfling hindurch verfolgt werden soll, möglichst schmalbandig sein, damit auch schmalbandige Qualitätsänderungen des Prüflings erfaßt werden können. Erst die frequenzabhängige Berücksichtigung aller im interessierenden Frequenzbereich (etwa 80 - 800 Hz) liegenden Meßdaten des Formpegels erlaubt ein generelles Urteil über die Lautsprecherqualität. Zudem haben vom Anmelder ausgeführte, nicht veröffentlichte Untersuchungen an harmonischen Signalen gezeigt, daß vor allem Phasenunterscheidungen benachbarter Harmonischer vergleichbarer Amplitude gut gehört werden. Außerdem zeigt eine grobe Übersicht über einige willkürlich herausgegriffene Spektren natürlicher periodischer Signale (Fig. 2), daß demnach die "wirksame" Bandbreite deutlich geringer ist als die Gesamtbandbreite der Spektren; da die Amplituden der höheren Teiltöne meist sehr schnell abnehmen und nicht mehr berücksichtigt zu werden brauchen, wenn sie 20 dB kleiner als die Grundwelle sind. Von daher ist die Wahl eines Testsignals geringer Bandbreite sogar wünschenswert, weil dadurch eher die subjektive Wirkung der natürlichen Spektren erfaßt wird.

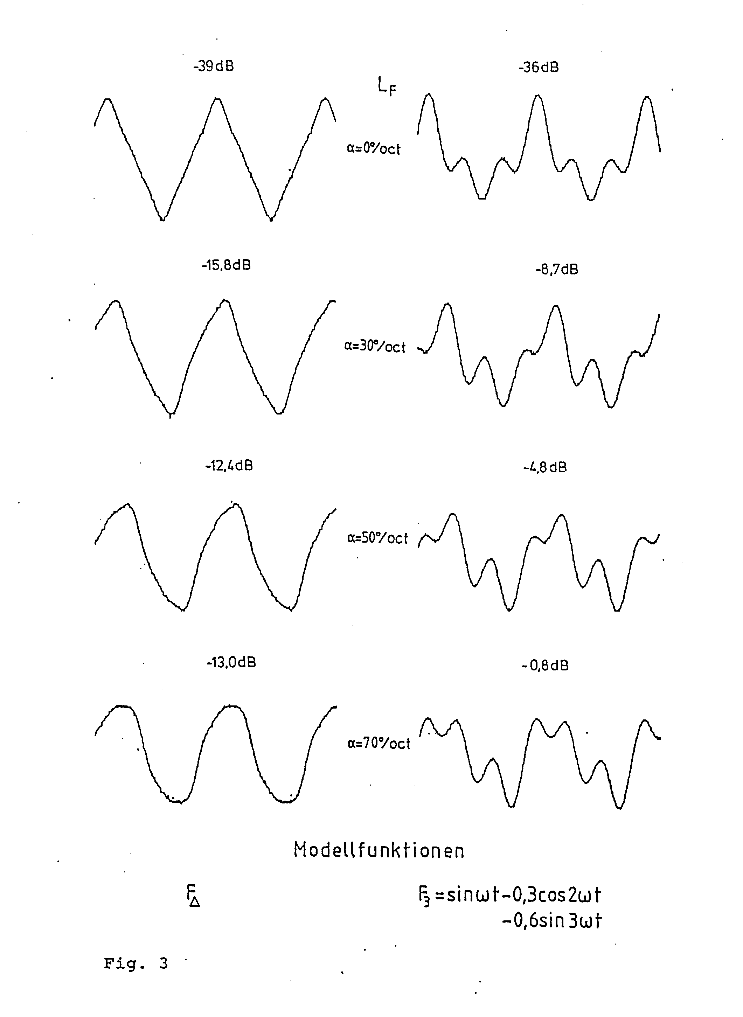

Ein weiterer wichtiger Gesichtspunkt zur Wahl des Testsignals ist die gute Sichtbarkeit der linearen Verzerrungen, wodurch auch die einfache Sichtkontrolle ermöglicht wird, z.B. zur "schnellen" Korrektur eines Lautsprechers. Fig. 3 zeigt ein Beispiel einer solchen geeigneten Modellfunktion $F_3$. Durch Wahl einer 90° Verschiebung für die Oberwelle (2ω) wird ein unsymmetrischer Aufbau in der x-Achse erreicht, der geringe Verzerrungen sichtbar werden läßt. Fig. 3 verdeutlicht die größere Empfindlichkeit der - schmalbandigen Modellfunktion $F_3$ auf reine Phasenverzerrungen gegenüber der Dreiecksfunktion, wie sie bei Lautsprecherübertragung häufig vorkommen. Die Wahl der Amplitudenverhältnisse, die die Teiltöne gegeneinander ha ben, beeinflußt vor allem den Formpegel. Der Wert des Formpegels ist i.a. bei gegebener Phasenverschiebung um so größer, je "gleichrangiger" die Amplituden sind. Die Formpegelwerte sind in Fig. 3 jeweils mitvermerkt. Fig. 4a zeigt schließlich die Formpegel, die diese Funktionen (Dreieck und $F_3$) in Abhängigkeit von der Phasenverschiebung pro Oktave erreichen.

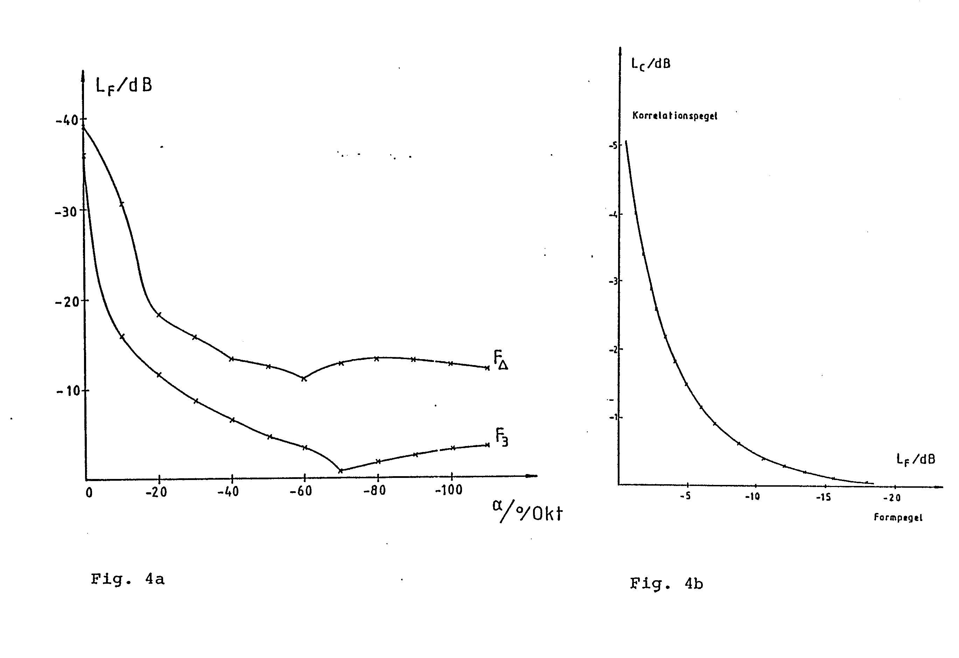

Der Vollständigkeit halber sei noch erwähnt, daß der Formpegel auch etwas zu tun hat mit der Ähnlichkeit, die Eingans-und Ausgansfunktion $\underline{U}_1$, $\underline{U}_2$ miteinander haben. Die Ähnlichkeit kann beschrieben werden mit dem Korrelationsgrad, respektive Korrelationspegel (Fig.1). Es zeigt sich, daß beide Maße unabhängig von der Modellfunktion ineinander umgerechnet werden können (vgl. Fig. 4b).

In jüngerer Zeit ist von vielen Autoren darauf hingewiesen worden /5/, /6/, daß Phasenverzerrungen speziell in Frequenzbereich unter 1 kHz gehört werden, vgl. auch /8/.

Generell läßt sich das Problem der Erfassung eines Klangs als "homogene Erscheinung" nur durch nichtlineares Hören erklären. Nichtlinearitäten setzt z.B. Schroeder beim Phasenhören voraus /7/. Tatsächlich ist nämlich das Ohr in der Lage, unter gewissen Phasenbedingungen ihrer Teiltöne Klänge als Ganzes zu erfassen, wobei der Gesamtklang eine andere Klangfarbe und Lautheit hat als in dem Fall, in dem durch geänderte Phasenwiedergabe der Klang "auseinanderfällt" und analytisch gehört werden kann. Nur, wenn z.B. bei zwei gleichzeitig tönenden Klängen jeder für sich als Einheit gehört werden kann, können sie auch voneinander getrennt werden (Problem der Homogenität und Klangtrennung), auch wenn ein Klang leiser als die anderen ist. Dies wird oft fälschlicherweise als "Entfernunghören" bezeichnet.

M. Schroeder führt die Hörbarkeit der Phasen der Teiltöne auf Nichtlinearitäten im Gehör zurück /7/, bei denen durch Überlagerung der Klirranteile mit den harmonischen Teiltönen des Klangs hörbar Änderungen des Spektrums erzielt werden. Diese Hypothese erscheint überzeugend bis auf die Schroeder'sche Annahme, daß die Nichtlinearität des Gehörs auf eine Kennlinienkrümmung zurückzuführen sind. In diesem Fall müßten die Phänomene stark und monoton vom Pegel abhängen, was sie jedoch nicht tun, wie in Untersuchungen des Anmelders nachgewiesen werden konnte.

In speziellen vom Anmelder vorgenommenen Versuchen ließ sich die Abhängigkeit des Höreindrucks harmonischer Signale in Abhängigkeit von der Phase der Teiltöne leicht nachprüfen: z.B. erscheint eine Dreieckfunktion bei 200 Hz Grundfrequenz ziemlich tief und homogen und ein wenig lauter gegenüber dem Fall, wenn die Harmonischen um je jeweils etwa 40° gedreht werden; die Verzerrung kann z.B. dadurch erzeugt werden, daß das Signal vor der Wiedergabe einen Allpaß mit 40°/Oktave durchläuft. Es lassen sich auch noch andere Funktionen, z.B. $F_3$ in Fig. 3 angeben, deren Klang stark vom Phasenschicksal abhängt.

Die Bedeutung einer phasentreuen Wiedergabe im Bereich der Grundtöne bis ca. 1 kHz wird durch die letzten Beispiele und auch die Arbeit /8/ klar.

Dies hat für die Praxis das Fazit:

1) eine phasentreue Wiedergabe erhält die Homogenität natürlicher Klänge, wodurch im Ensemble des Orchesters die Durchsichtigkeit erhalten bleibt. Leise Instrumente können unter lauten herausgehört werden.

2) Da auch die Lautheit der Klänge von der "richtigen Phase" abhängt, bleibt die Lautheitsdynamik von Einzelklängen gegenüber dem Orchester voll erhalten, d.h. die "innere Dynamik" voll erhalten.

3) Die scheinbare Quellausdehnung von Klängen bleibt erhalten.

4) Bei Phantomquellenwiedergabe - z.B. stereopho ischer oder gar eidophonischer Wiedergabe /9/ - wird die gesamte Quelle als Ganzes punktförmig geortet. Schallquellen in der Mitte zwischen den Lautsprechern erscheinen punktförmig, ihre Ortung ist weniger stark von der Zuhörerposition abhängig. Bei eido -phonischer Zweiebenenübertragung erscheinen nahe Schallquellen präzise und punktuell ortbar und viel natürlicher.

Entsprechend verschlechternd wirken sich Phasenverzerrungen im Frequenzbereich unter 2 kHz aus, indem Orchester große Schall -druckpegel erzeugen bei 200 Hz - 500 Hz:

1) Indem die Klänge "auseinanderfallen", entsteht ein Frequenzgemisch, bei dem die Zuordnung zum Einzelklang verlorengeht. Es entsteht ein "Orchesterbrei", dessen zeitliche und örtliche Auflösung nicht mehr möglich ist.

Einzelklänge fallen auseinander und klingen heller oder dunkler, je nach dem Anteil starker Teiltöne, die jetzt herausgehört werden können und die Klangfarbe bestimmen. Die Gesamtwiedergabe erscheint wechselhaft verfärbt und unnatürlich. Durch Veränderung des Amplitudengrenzfrequenzgangs ist diese Verfärbung nicht rückgängig zu machen, weil sie sich von Klang zu Klang ändert.

2) Phasenverzerrungen bedingen i.a. eine Verringerung der Lautheit einzelner Klänge gegenüber dem Kollektiv, d.h. eine Veränderung der "inneren Dynamik". Die Wiedergabe erscheint verfälscht.

3) Die örtliche Wiedergabe des Klangs erscheint flach und undifferenziert und "flächenhafter", wenn die Phasen natürlicher Klänge verzerrt werden.

4) Phasenverzerrungen natürlicher Klänge bewirken eine breite Ausdehnung der Schallquelle zwischen den Lautsprechern (Phantomquellenwiedergabe), wodurch die Ortbarkeit stark leidet. Die Schallquellen in der Mitte sind gegenüber denen, die bei stereophonischer Wiedergabe seitlich geortet werden, nicht mehr wahrzunehmen (Loch in der Mitte).

Mit Hilfe des Formpegels $L_F$ in Abhängigkeit von der Frequenz läßt sich das Verhalten des Lautsprechers frequenzabhängig voraussagen, vorausgesetzt, daß das Modellsignal gerad-und ungeradzahlige Harmonische enthält, vorzugsweise neben der Grundwelle $\omega$ die Obertöne $2\omega$ und $3\omega$ (vgl. hierzu $F_3$ in Fig. 3).

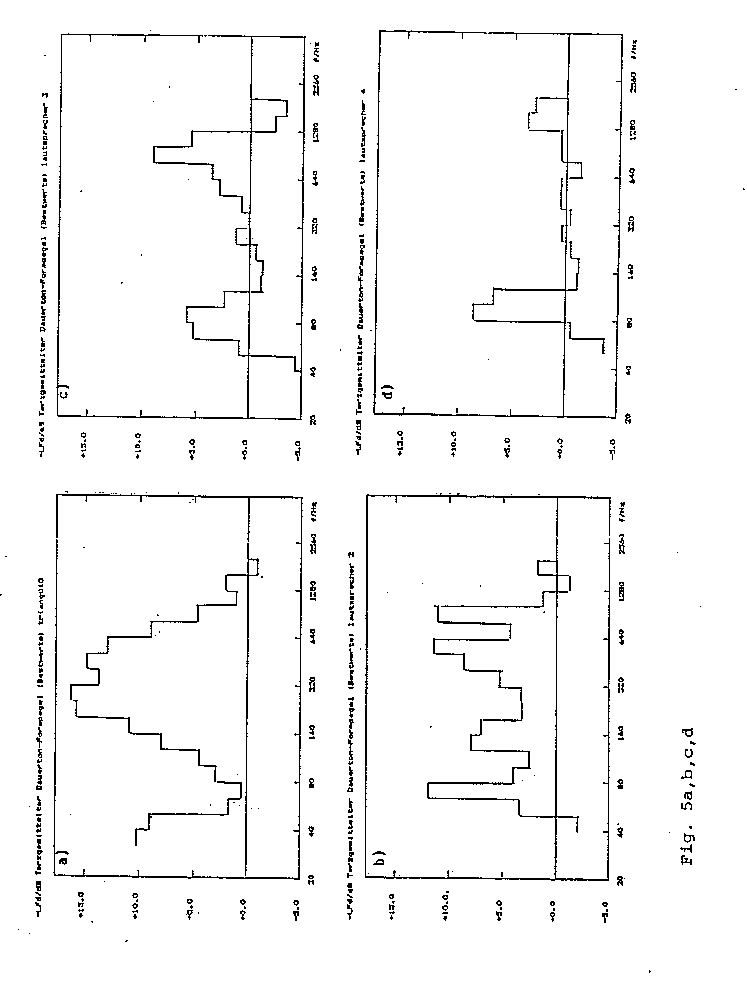

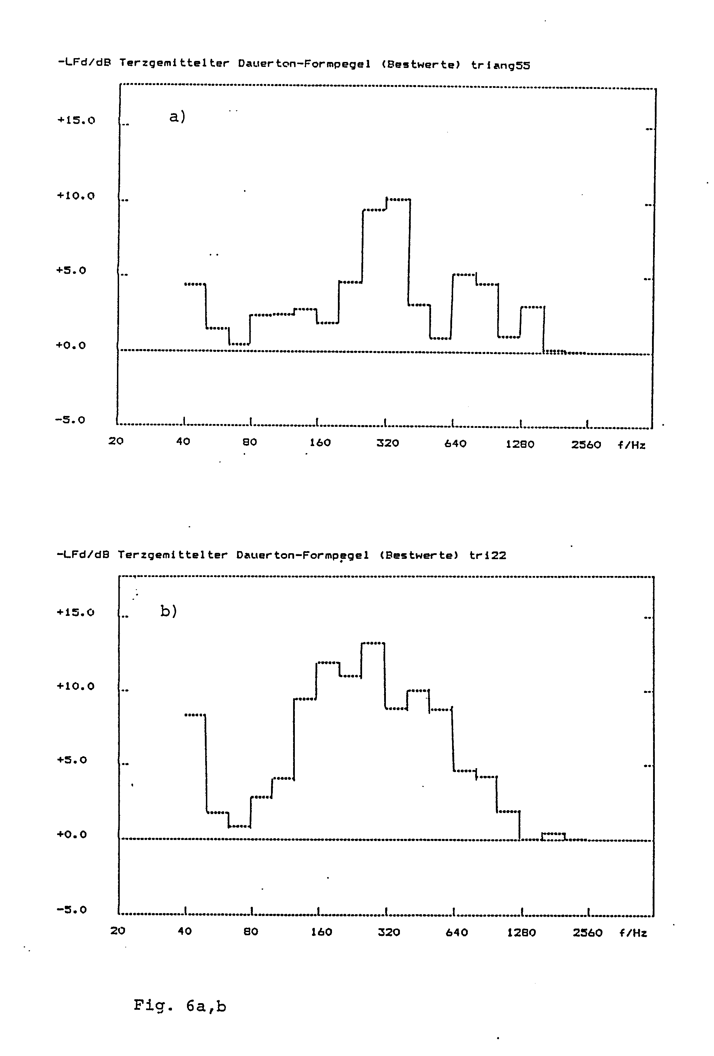

In Fig. 5a,b,c und Fig 6a,b sind die Formpegelwerte zusammengestellt, die an verschiedenen Lautsprechern gesmessen wurden. In Fig. 5a,b,c,d werden verschiedene Lautsprecher verglichen. Man sieht, daß die Unterschiede - und damit auch die Hörergebnisse - stark frequenzabhängig sind; bei Hörvergleichen muß man entsprechend vorsichtig verfahren. Es liegt auf der Hand, daß besonders gute Lautsprecher dazu neigen, bereichsweise stark zu schwanken. Starke Einbrüche im Formpegel bis auf Werte um 0 bis 3 dB besonders im Frequenzbereich großer Orchesterlautstärke (z.B. um 300 - 400 Hz, Lautsprecher 3 und 4) müssen sich katastrophal auswirken. Ein guter Lautsprecher sollte hier Werte besser als -10 bis -8 dB haben, die etwa die Hörbarkeitsgrenze kennzeichnen. Die Fig. 6a,b zeigen, wie es aufgrund der Formpegelanalyse möglich ist, einen Lautsprecher systematisch zu verbessern. Dies wird besonders dann erleichtert, wenn außer dem Formpegel auch noch die klassischen Daten, z.B. der Amplitudengang $A_2/A_1$, die Phasenlaufzeit $\phi/\omega$ und die Gruppenlaufzeit $d\phi/d\omega$ in ausreichender Störfreiheit mitgemessen werden. Es sei noch vermerkt, daß Formpegelwerte von $L_F = {}^-9$ dB etwa die Hörbarkeitsgrenze markieren und daß deswegen Lautsprecher, die diesen Wert insbesondere zwischen 150 und 500 Hz unterschreiten, recht gut sind (Fig. 6b).

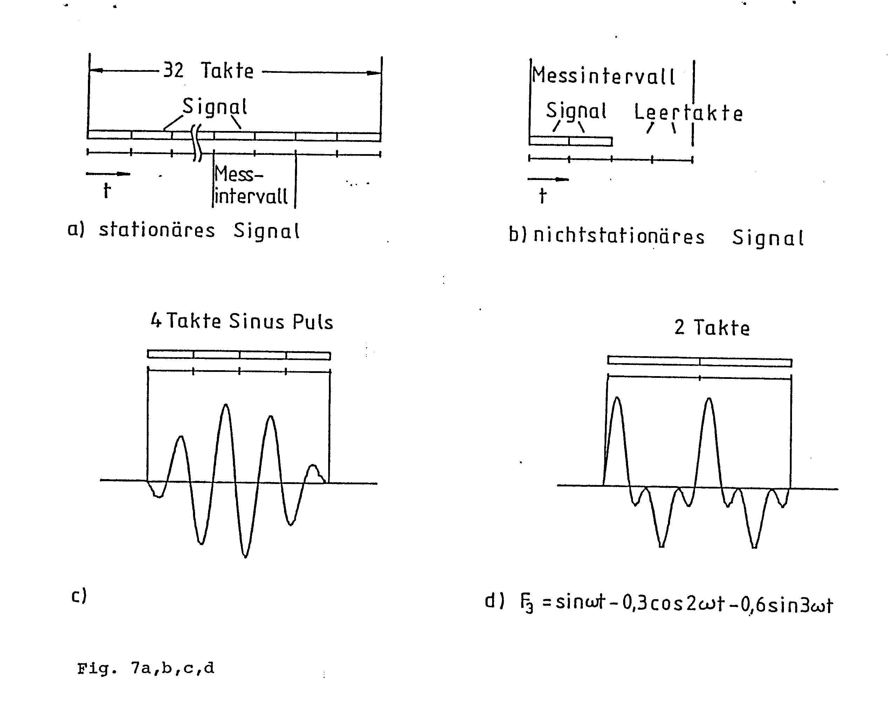

Eine weitere Meßhilfe besteht darin, den Formpegel außer im "eingeschwungenen Zustand" auch für kurze Pulse zu messen. Zu diesem Zweck (Fig. 7a,b) wird außer einem langen "Zug", der z.B. aus 32 Perioden besteht, ein kurzer Zug aus zwei Perioden (Fig.7) ausgesendet. Die Auswertung erfolgt jedoch über insgesamt vier Perioden, also auch über zwei "Leerperioden" am Ende des Sendesignals hinweg. Wenn nach "Abschalten" des Sendepulses der Lautsprecher stark "nachklingelt", wird dies den ausgesendeten Puls gegenüber dem Original stark verändern, so daß der Formpegel sich - gegenüber dem statisch gemessene Formpegel -stark verändert. Eine andere bessere Art der Auswertung besteht darin, die Energie der "Nachschwingung" in den beiden Leertakten auf die Energie innerhalb der Sendetakte zu beziehen.

Diese Pulsmessungen erfassen das dynamische Verhalten des Lautsprechers, was für die Sprach-und Musikwiedergabe wichtig ist. Es lassen sich so mühelos störende "versteckte" Resonanzen aufspüren.

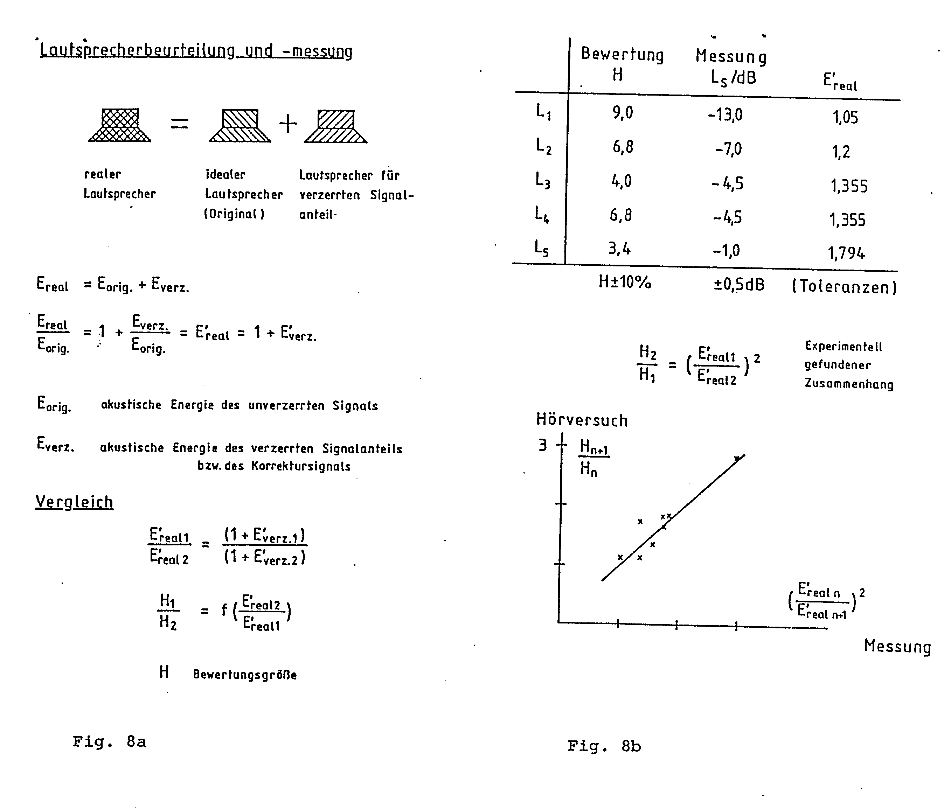

Der Formpegel ist der Pegel des Korrektursignals, das dem realen Lautsprecher-Ausgangssignal zugesetzt werden muß, um das Originalsignal zu erhalten. Er kann aber auch als der Pegel des "Verzerrungssignals" aufgefaßt werden, der dem unverzerrten Originalsignal zugesetzt wird, um den Pegel des realen Lautsprechers zu simulieren (Fig. 8a). Bei einem Vergleich von zwei Lautsprechern hinsichtlich einer Qualitätseigenschaft, die von den linearen Verzerrungen abhängt (wie z.B. die "Durchsichtigkeit" von Orchesterpassagen, die Homogenität des Klangs, die punktfömige Ortung von Phasenquellen) kann man daher davon ausgehen, daß er von dem Verhältnis der Realpegel (Fig. 8a) der beiden Lautsprecher abhängt, die sich aus dem Formpegel bestimmen lassen. Die Funktion, mit der die Beurteilungswerte H - die jeweils auf das unverzerrte Original bezogen sind -von den relativen Gesamtpegeln abhängen, muß experimentell bestimmt werden. Versuche ergaben eine quadratische Abhängigkeit gemäß Fig. 8b.

Zur Messung des Formpegels und aller anderen notwendigen Daten

$$\left\{ \ \varphi/\omega \ , \ d\varphi/d\omega \ , \ A_2/A_1 \ , \ L_F \ , \ \Delta L_{F \ nicht \ stat.} \ \right\}$$

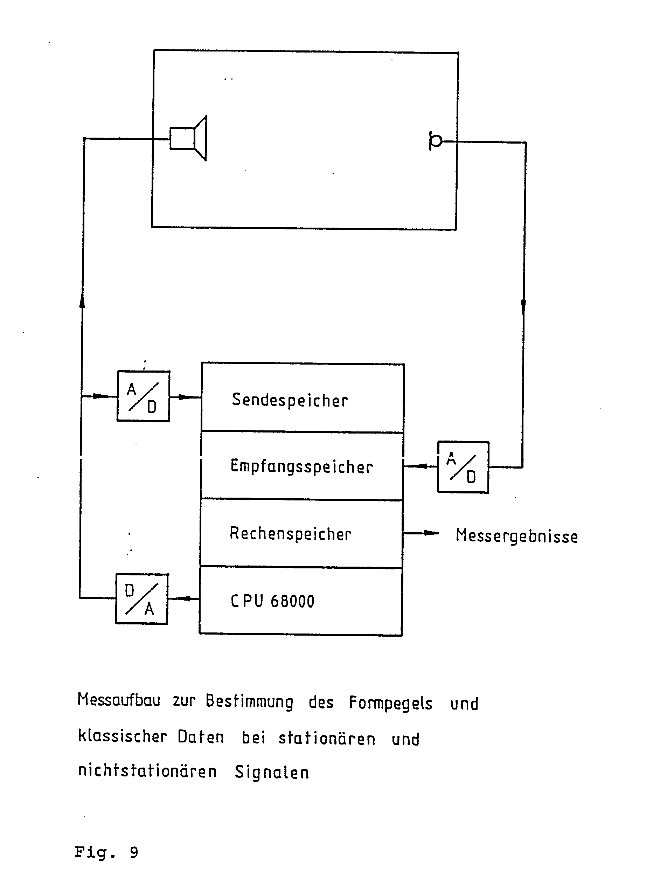

wurde ein Mikroprozessorsystem (CPU 68000) programmiert, bei dem gemäß Fig. 9 eine Grundschwingung der Sendefunktion ($\omega/2\omega/3\omega$) im Speicher abgelegt und mit 1 k bis 32 Werten pro Grundschwingung ausgesendet wird, wobei das empfangene Signal in einem anderen Speicherbereich abgelegt wird.

| Oktave | | | Abtastwerte | Abtastrate 20K- 39 kHz |
|---|---|---|---|---|
| 20 | - | 40 Hz | 1024 | 18 Werte/Oktave |
| 40 | - | 90 Hz | 512 | |
| 90 | - | 160 Hz | 256 | |
| 160 | - | 320 Hz | 128 | |
| 320 | - | 640 Hz | 64 | |
| 640 | - | 1230 Hz | 32 | |
| 1230 | - | 2460 Hz | 59 - 15 | 75,5 kHz |

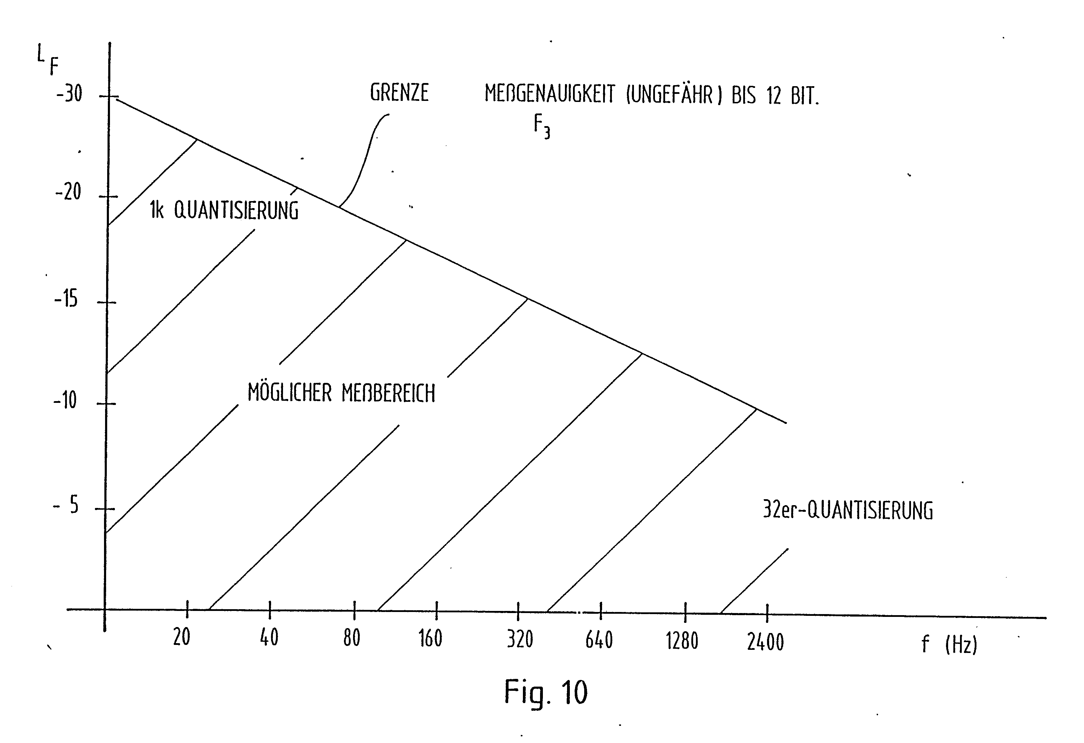

Im Interesse einer hohen Genauigkeit der Phasenmessung bei tiefen Frequenzen mußte auf einen hohen Störspannungsabstand hingearbeitet werden, weshalb sich statt der Pulsmessung via Fouriertransformation die sukzessive Messung mit Sinussignalen und Modellfunktion in hoher Auflösung (18 Werte/Oktave), vgl. obige Tabelle und Fig. 10. Die Genauigkeit der Messung des Formpegels mit der vorliegenden Modellfunktion ist besser als -16 dB, wenn man im Versuch die Übertragungsstrecke durch eine Drahtverbindung ersetzt. Bei hohen Frequenzen sinkt die Genauigkeit wegen der Verminderung der Abtastwerte. Zur Normierung der Empfangsfunktion auf die Grundwelle wird vor der Modellfunktion die Grundwelle ausgesendet, um das Amplitudenverhältnis $A_2/A_1$ der Grundwelle zu bestimmen. Während diese Messung bis 20 kHz möglich ist, kann der Formpegel nur von 20 Hz bis 2,5 kHz in 7 Oktaven gemessen werden, wobei in allen Oktaven 18 logarithmische gleichverteilte Grundfrequenzen benutzt werden. Als Dauersignale werden jeweils 32 Schwingungen ausgesendet (Fig. 7a), als Kurzzeitsignal werden zwei Schwingungen ausgesendet (Fig. 7b), die jeweils mit dem Wert 0 anfangen und aufhören, um "Knackfreiheit" zu garantieren. Der verwendete Wandler garantiert 12 Bit Genauigkeit bei einer maximalen Abtastgeschwindigkeit von ca. 80 kHz. Da der Sende-und Empfangsbetrieb gleichzeitig asynchron möglich sein muß, werden bei beliebiger laufzeitbedingter Verzögerung für die Speicherung des Sende-und des Empfangssignals zwei getrennte AD-Wandler benötigt (vgl. Fig. 9).

Am problematischsten ist die Phasenmessung, d.h. die richtige Zuordnung des Sende-und Empfangsspeichers, der natürlich von der Meßgeometrie abhängt. Da diese sich während einer Messung nicht ändert, werden vor der eigentlichen Messung Sinuspulse aus vier Schwingungen, die sinusförmig gewichtet sind, bei 300 und 800 Hz ausgesendet, um die Phasen-und die Gruppenlaufzeit näherungsweise festzulegen.

Vor jeder Einzelmessung wird diese Messung wiederholt, wobei zur Festlegung der Speicherzuordnung eine gewichtete Mittelung erfolgt, bei der der aktuelle Wert durch entsprechende Wichtung des letzten Wertes besonders stark eingeht. Damit werden Fehler durch einen lernfähigen Algorithmus ausgemittelt. Beim stationären Signal (32 Perioden Grundschwingung) wird die Phasenmessung durch Bestimmung des Nulldurchgangs sowie abgekürzter Kreuzkorrelation bestimmt. Die Zuordnung ist beim nichtstationären Signal schwieriger als beim stationären; es müssen zur nichtstationären Zuordnung umfangreichere Korrelationsberechnungen durchgeführt werden.

Insgesamt erfordert die Phasenmessung einen großen Rechen-und Zeitaufwand, der nur durch Einsatz eines Coprozessors wesentlich verkürzt werden könnte.

Die Messungen sind demnach folgende

1. Frequenzgangmessungmit 32 Schwingungen Grundwelle
Signalerfassung, Gleichspannungsbefreiung
Effektivwertbildung, Bildung $(A_2/A_1)$ 20 Hz --20 kHz

2. PhasengangmessungSignalerfassung, Gleichspannungsbefreiung
Speicherzuordnung für 32-Periodensignal Grundwelle
Speicherzuordnung für Kurzzeitsignal mittels Kreuzkorrelation eines 4-Perioden-Grundwel lensignals mit Sinuswichtung

$$\text{Meßgrößen:} \quad \left\{ \varphi/\omega \; ; \; d\varphi/d\omega \; ; \; \varphi/\omega - d\varphi/d\omega \right\}$$

3. Formpegelmessung mit Modellfunktion Normierung mit Amplitudengang der Grundwelle
$L_F$ und $L_{F_{inv}}$ (Invertierung des Empfangssignals)

$$L_F = 20 \lg \frac{(g'(t) - S(t))_{eff}}{S(t)_{eff}}$$

nichtinvert:

$$g'(t) = g(t) \frac{S_{o(t)}}{g_{o(t)}}$$

invertiert:
$$g'(t) = -g(t - T/2) \text{ mit T Signalperiode}$$

Stationäre Messung über 4 Perioden am Ende der 32-Sequenz, über 4 Perioden $L_{FPuls}$ (nicht stat.)

Nichtstationäre Messung; $(L_F, L_{Finv}, L_{FPuls})$

Programmteile

1) "Meßprogramm "MMM" Hauptmessung und Datensicherung (Files)

d     Dauerton Aussendung der Modellfunktion beliebiger Frequenz zur optischen Kontrolle und Einstellung der Anlage

f     Frequenzgang

g     Phasengang bzw. Phasenlaufzeit

P     Formpegel

?     Bedienungshinweise

?     Ende

Abspeichern des Meßdatenfiles,

2) Programm rec Darstellung des Meßdatenfiles

3) Programm ppp Graphische Darstellung der Meßergebnisse

4) Programm Klang Speicherung und Wiedergabe von 3,5 s Ausschnitten beliebiger Signale mit hoher Abtastrate, ca. 70 kHz

Alle Programme sind in Computersprache "C" geschrieben. Das Programmlisting ist beigefügt.

Im Vorhergehenden wurde ein Verfahren und eine Vorrichtung für die Messung der Übertragungsqualität von elektroakustischen Übertragungsstrecken, insbesondere von Lautsprechern vorgestellt, bei dem mittels eines relativ schmalbandigen harmonischen Modellsignals bzw. einer Modellfunktion, das neben der Grundwelle die geradzahligen und ungeradzahligen Harmonischen enthält, die Abweichung des Ausgangssignals bzw. der Ausgangsfunktion von dem Eingangssignal bzw. der Eingangsfunktion bestimmt wird. Der Pegel dieser Differenzfunktion (Formpegel) wird auf den Pegel der Eingangsfunktion bezogen. Aus Gründen des verbesserten Störspannungsabstandes erfolgt die Auswertung im Zeitbereich.

Der Formpegel stellt bei Verwendung vorgenannter Modellfunktionen ein wichtiges Maß für die Wiedergabequalität eines Lautsprechers hinsichtlich der originalgetreuen Klangwiedergabe, der Durchsichtigkeit, der Verfärbungsfreiheit sowie der geometrischen Wiedergabequalität von Phantomquellen dar. Der Formpegel wird sowohl für langzeitige als auch pulsförmige Signale bestimmt. Indem vorzugsweise eine schmalbandige Modellfunktion aus $\omega$, $2\omega$ und $3\omega$ und mit vergleichbaren Amplituden (z.B. 1; -0,3; -0,6) verwendet wird und der Frequenzgang der Meßgrößen $L_F$ bestimmt wird, erlangt man genauen Aufschluß über die frequenzabhängige Wiedergabequalität, aufgrund derer - und einiger klassischer Daten (Phasenlaufzeit, Gruppenlaufzeit, Amplitudenfrequenz) man Verbesserungen vornehmen kann. Es kann das Verhältnis über Bewertungszahl H eines Lautsprechers, die im Hörversuch gegenüber derjenigen (Hr) eines anderen Lautsprechers erzielt wird, vorausberechnet und ausgegeben werden. Mit dem Meßprogramm führt das Mikroprozessorsystem des Meßgerätes automatisch alle notwendigen Messungen nacheinander durch und berechnet die Meßwerte, wertet diese aus und stellt sie dar. Die in diesen Zusammenhängen angegebenen Beschriftungen der Figuren sind ebenso wie der Inhalt der Figuren der Offenbarung zuzurechnen, wie auch das beigefügte Programmlisting.

Ein Testsignal, mit dem die linearen Verzerrungen eines periodischen Signales durch eine Übertragungsstrecke, insbesondere die Wiedergabequalität eines Lautsprechers gemessen werden sollen, sollte zusammenfassend folgende Anforderungen erfolgen:

1. Es muß schmalbandig sein, z.B. aus einer Grundwelle mit einer Grundfrequenz sowie der zwei-und dreifachen Harmonischen bestehen, damit Aufschluß über die Frequenzabhängigkeit der Verzerrungen gewonnen werden können. Hieraus können dann auch Konstruktionshinweise für die Übertragungsstrecke bzw. den Lautsprecher ermittelt werden.

2. Mit zunehmender Phasenänderung, z.B. der Phasendrehung pro Oktave, müssen sich die Formpegelwerte monoton verhalten, zumindest in dem Verzerrungsbereich, der für Lautsprecher relevant ist. Dies betrifft Phasenänderungen bis zu 100° pro Oktave.

3. Das Spektrum des Testsignals muß dem Mittel der natürlichen Spektren ähneln.

Ein Testsignal aus einer Welle mit der Grundfrequenz, der zweifachen Harmonischen und der dritten Harmonischen mit den normierten Amplituden von 1, 0,3 bzw. 0,6 arbeitet bis zu Phasenverschiebungen von ca. 90° pro Oktave monoton, d.h. die Formpegelwerte steigen von kleinen Werten, z.B. -16 dB zu großen von etwa 0 dB mit der Phasenverzerrung monoton an, um dann bei größeren Phasenverzerrungen wieder etwas abzunehmen, z.B. nach -2 dB. Letzteres ist deswegen nicht sehr bedenklich, weil auch natürliche Signale dem gleichen Prozeß unterliegen.

Daraus folgt, daß das angegebene Testsignal bei schlechten Lautsprechern durch ein günstigeres Testsignal ersetzt werden könnte, das die gleichen Harmonischen aufweist, jedoch mit den normierten Amplituden von 1, 0,5 bzw. 0,6 oder gar 1,1 bzw. 1. Ein Testsignal mit den letztgenannten Amplituden ermöglicht Phasenänderungen bis 180° eine monotone Messung des Formpegels. Günstig ist auch eine Normierung auf den Effektivwert.

Andererseits zeigt die Analyse vieler natürlicher Spektren, daß das erstgenannte Testsignal und auch noch das zweitgenannte Testsignal etwa dem Mittel der natürlichen Spektren entspricht und deswegen auch den Forderungen der Musik gerecht wird. Allerdings ist zu berücksichtigen, daß natürliche Spektren mit Grundfrequenzen unterhalb von 300 Hz im Mittel breiter sind und von der Grundfrequenz bis zu deren fünffachen Wert reichen, wobei die maximale Amplitude bei der dreifachen Grundfrequenz liegt. Um Aussagen über den Frequenzbereich um 100 Hz machen zu können, folgt daraus, daß das erstgenannte oder zweitgenannte Testsignal bei der zwei-bis dreifachen Frequenz, also bei 200 bis 300 Hz angewendet werden sollte.

Bei Übertragungsstrecken und insbesondere Lautsprechern sind auch die nichtlinearen Verzerrungen vor allem bei tie fen Frequenzen unter 100 Hz stark, und zwar wegen der in diesem Frequenzbereich großen Lautsprecheramplituden. Andererseits sind die nichtlinearen Verzerrungen im Bereich von 500 Hz gut hörbar. Dies gilt vor allem für die Differenztonverzerrungen.

Aus diesem Grunde empfiehlt es sich, im Bereich unterhalb 50 bis 100 Hz Klirrfaktormessungen, oberhalb dieses Bereiches jedoch Differenztonmessungen auszuführen, d.h. Messungen mit einer Grundfrequenz f0 und mit einer benachbarten Frequenz f'0, die mit der Grundfrequenz über einen Proportionitätsfaktor K zusammenhängt, der bevorzugt Werte zwischen 1,2 und 1,6 aufweist. In unmittelbarer Nähe der beiden Signalfrequenzen f0 und f'0 entstehen die Differenztöne, die durch die kubischen Verzerrungen bewirkt werden. Die quadratischen Verzerrungen bewirken zusätzliche nicht harmonische Frequenzen im Abstand der Differenzfrequenz ausgehend von der Frequenz Null. Für eine Messung mittels Fourier-Analyse ergeben sich daraus folgende Forderungen:

Die Abstände der beiden Testfrequenzen f0 und f'0 müssen so gewählt werden, daß besonders bei einer Messung im tieffrequenten Bereich die beiden Verzerrungsprodukte, d.h. kubische und quadratische Verzerrungen nicht zusammenfallen.

2. Die Abtastrate muß groß genug sein, um das Abtasttheorem auch bis zu dem Fünffachen der Grundfrequenz, d.h. bis 5 f0 mit einiger Sicherheit noch nicht zu verletzen, dies, um auch die Verzerrungen in höherer Lage zu erhalten, z.B. bei den Frequenzen 2 f'0 und 3 f'0.

3. Die zeitliche Dauer des gemessenen Signalabschnitts $T_s$ muß groß genug sein, um die benötigte Auflösung $\Delta f$ zur Trennung der verschiedenen Verzerrungen sicherzustellen, d.h. $\Delta f$ soll ungefähr gleich dem Reziproken von $T_s$ sein.

4. Die Länge des Signalausschnittes sollte ein ganzzahliges Vielfaches der Schwebungsperiode sein, um Fehler bei der Fourier-Analyse zu vermeiden.

Es ist sinnvoll, die Signalerzeugung sowie die Signalaufnahme und Weiterverarbeitung durch Fourier-Analyse mit dem gleichen Rechner zu machen, um eine starre Kopplung zu erreichen. Auf diese Weise kann z.B. auf ein Wichtungsfenster verzichtet werden, weil die Signallänge sich im strengen Vielfachen der Periodizitäten herstellen läßt. Die folgende Tabelle gibt ein Beispiel für die Lage der Frequenzen f0 bzw. f'0. Die Abtastung erfolgt in diesem Falle über 16 Schwebungsperioden.

| $T_s$ | fo/Hz |
|-------|-------|
| 1,4s | 50 |
| 1,6s | 100 |
| . | 150 |
| ' | 200 |
| . | 300 |
| . | 400 |
| . | 600 |
| . | 800 |
| 1,9s | 1k |
| . | 2k |
| . | 3k |
| 0,5s | 4k |

Die Frequenz f'0 ist hierbei gleich dem K-fachen der Frequenz f0, mit Werten für K von 1,2, 1,4 bzw. 1,6. Hieraus ergeben sich 16384 Werte mit 16 Schwebungsperioden bei einer 1024-er Fourier-Analyse.

Die Klirrfaktormessung ist bei tiefen Frequenzen unter 100 Hz vorzuziehen, weil die Zahl der Verzerrungsanteile geringer ist und weiter von den Signalfrequenzen abliegen, insbesondere bei der zweifachen und der dreifachen Grundfrequenz f0 und damit vom Lautsprecher noch gut abgestrahlt werden. Die Anforderungen bezüglich der Abtasthäufigkeit und Abtastdauer sind ähnlich wie bei der Differenztonmessung, so daß die gleichen Werte für die Signaldauer $T_s$ und die gleichen Abtastraten verwendet werden, innerhalb der gekoppelten Signalerzeugung und Verarbeitung durch die Fourier-Analyse.

Um die Gesamtverzerrungen des Systems zu erhalten, können die quadratischen und kubischen Differenztöne, die Klirrspektren aller Einzelmessungen von 100 Hz bis 4 kHz rechnerisch zu einem Effektivwert zusammengefaßt werden und auf den Signalwert bezogen werden, um zu einer einzelnen Meßzahl zu kommen.

Zusammenfassend sollte die Messungen der kubischen und quadratischen Differenztöne im festen Verhältnis der Frequenzen f0 und f'0 im Frequenzbereich oberhalb 100 Hz und eine anschließende Analyse mit festgekoppeltem Fourrier-System so erfolgen, daß die Signalerzeugung und die Signalausgabe sowie die Fourier-Analyse immer parallel erfolgen. Außerdem sollte die Abtastung immer ausreichend lange Zeiträume, z.B. über 16 Schwebungsamplituden, d.h. über etwa 1,26 Sekunden erfolgen, um eine ausreichende Frequenzauflösung zu erhalten. Die Abtastung im Vielfachen der Schwebungsamplitude vermeidet Störungen, die durch Aneinandersetzen der Abtastintervalle entstehen. Diese Technik macht ein Gewichtungsfilter überflüssig.

Unterhalb von 100 Hz sollten die Klirrfaktoren bei dem zweifachen und dreifachen Wert der Grundfrequenz f0 wegen der dort gesicherten Abstrahlung durch den Lautsprecher gemessen werden. Die Messung erfolgt wie vorhergehend angegeben.

/1 / Alt Gabrielsson, Björn Lindström
Perceived Sound Quality of High-Fidelity Loudspeakers AES Vol. 33 No 1/2 (1985)
/2 / F. E. Toole
Subjective Measurements of Loudspeaker Sound Quality and Listener Performance AES Voll 33 No 1/2 (1985)
/3 / P. Scherer, K. Zünkler
Hörbarkeit und Messung phasenbedinger linearer Verzerrungen ICA Toronto (1986)
/4 / P.C. Mathes, R.L. Miller
Phase Effects in Normal Perception JASA Vol. 19 (1947)
/5 / L.R. Fincham
The Subjective Imortance of iniform Group Delay at Low Frequencies AES, Vol. 33/6 S. 436
/6 / S.P. Lipschitz et.al.
On the Audibility of Midrange Phase Distortions, AES (1982)

7 · M. Schroeder
Models of Hearing Proceedings of IEEE, Vol. 63 (1975)
6 · H. Schmidt, G. Elfert
Versuche zum Phasenhören in Räumen DAGA 1985, S. 503
9 · P. Scherer
Patent Nr. DB 2837130

## Ansprüche

1. Verfahren zur Bestimmung der linearen Verzerrungen einer elektroakustischen Übertragungsstrecke, die z.B. aus Mikrofon, Meßraum und Lautsprecher besteht, wobei die linearen Verzerrungen mittels der Differenzbildung zwischen einem periodischen Eingangssignal als Testsignal und dem Ausgangssignal der Übertragungsstrecke bestimmt werden, dadurch gekennzeichnet,
daß das Testsignal nur aus wenigen, etwa gleich starken gerad-und ungeradzahligen harmonischen Teiltönen vergleichbarer Amplitude besteht,
daß die Differenz zwischen Eingangs-und Ausgangssignal gebildet wird und der Pegel dieses Differenzsignals auf den Pegel des Eingangssignals bezogen wird (Formpegelbestimmung), daß der Formpegel eines Testsignals als Maß für die Verzerrungen periodischer Signale in Abhängigkeit von der Frequenz der Grundwelle im interessierenden Frequenzbereich (20 Hz - ca. 3 kHz) bestimmt wird, und daß aus diesen frequenzabhängigen Formpegeln als Maß für die linearen, frequenzabhängigen Verzerrungen die Energien des unverzerrten und des verzerrten Anteils des Testsignals bestimmt werden.

2. Verfahren nach Anspruch 1, dadurch gekennzeichnet, daß vor der Formpegelbildung das Ausgangssignal auf den Effektivwert des Eingangssignals gebracht wird.

3. Verfahren nach Anspruch 1, dadurch gekennzeichnet, daß vor der Formpegelbildung vorzugsweise die Amplitude der Grundwellen im Eingangs-und Ausgangssignal durch Änderung der Amplitude des Ausgangssignals einander angeglichen werden.

4. Verfahren nach einem der Ansprüche 1 bis 3, dadurch gekennzeichnet, daß die Differenz zwischen Eingangs-und Ausgangssignal im Zeitbereich und/oder im Frequenzbereich gebildet wird.

5. Verfahren nach einem der vorhergehenden Ansprüche, dadurch gekennzeichnet, daß die Formpegelbestimmung sowohl mit stationären als auch mit nichstationären Testsignalen durchgeführt wird.

6. Verfahren nach einem der vorhergehenden Ansprüche, dadurch gekennzeichnet, daß ein - schmalbandiges Testsignal verwendet wird.

7. Verfahren nach einem der vorhergehenden Ansprüche, dadurch gekennzeichnet, daß aufgrund der Bestimmung der Energien des unverzerrten und des verzerrten Anteils des Testsignals ein Maß für die subjektive Übertragungsqualität der elektroakustischen Übertragungsstrecke hinsichtlich der homogenen Klangwiedergabe, der Durchsichtigkeit und Naturtreue des Klanges bei gleichzeitig guter Trennung unterschiedlicher Klänge abgeleitet wird.

8. Verfahren nach einem der vorhergehenden Ansprüche, dadurch gekennzeichnet, daß zur Erhöhung des Fremdspannungsabstandes und damit der Meßgenauigkeit der Phasenbestimmung im niedrigen Frequenzbereich (<500 Hz) das Meßsignal stationär bzw. im Pulsbetrieb über einige wenige Perioden gesendet wird und die Frequenzabhängigkeit der Meßgrößen durch wiederholtes Aussenden des Testsignals mit unterschiedlicher Grundfrequenz erfolgt.

9. Verfahren nach einem der vorhergehenden Ansprüche, dadurch gekennzeichnet, daß das Testsignal aus der Grundwelle und den beiden Harmonischen $2\omega$ und $3\omega$ besteht, daß die Harmonische $2\omega$ gegenüber der Grundwelle um -90° sowie die Harmonische $3\omega$ um -180° phasenverschoben ist.

10. Verfahren nach einem der vorhergehenden Ansprüche, dadurch gekennzeichnet, daß das Testsignal mit wählbarer Grundfrequenz als Dauersignal ausgesendet wird.

11. Verfahren nach einem der vorhergehenden Ansprüche, dadurch gekennzeichnet, daß die Amplitudenwerte des Testsignals digital in ausreichender Zahl von Stützstellen pro Grundperiode berechnet und abgespeichert werden, daß dann eine beliebige Zahl von Perioden des Testsignals ausgegeben und nach Digital-Analogwandlung ausgesendet werden, wobei das Ein-und Ausschalten des analogen Testsignals knackfrei, d.h. jeweils beim Wert Null der Amplitudenwerte erfolgt, und daß die Abtastung des ausgesendeten Signals aus den gleichen Stützwerten erfolgt.

12. Verfahren nach Anspruch 11, dadurch gekennzeichnet, daß die Speicherzuordnung durch Aussendung einer gewichteten Sequenz von wenigen Perioden der Grundwelle mittels Auffinden der Null-Durchgänge durch Drehmomentbestimmung einiger Abtastwerte, d.h. Multiplikation der Amplitudenwerte mit den zugehörigen Zeitwerten auf der Abszisse, in der Nachbarschaft des Null-Durchgangs und anschließend durch zusätzliche Kreuzkorrelation des Sende-und Empfangssignals in der Nähe des zuerst gefundenen Null-Durchgangs mit größerer Meßgenauigkeit erreicht wird.

13. Verfahren nach Anspruch 12, dadurch gekennzeichnet, daß das Testsignal als stationäres Signal mit ca. 32 Perioden ausgesendet wird.

14. Verfahren nach Anspruch 11, dadurch gekennzeichnet, daß als nichtstationäres Signal wenige, z.B. zwei Perioden des Testsignals knackfrei ausgesendet werden, die aber etwa über den gleichen Zeitraum nach Abschalten des Pulses wieder ausgewertet werden, um das dynamische Verhalten der Meßstrecke zu erfassen, insbesondere dadurch, daß der dynamisch gemessene Formpegel auf den stationär gemessenen bezogen wird oder vorzugsweise dadurch, daß das Verhältnis der Energien im Zeitraum des Tonpulses und dem unmittelbar anschließenden gleich langen Zeitraum nach Abschalten des Tonpulses gemessen wird.

15. Verfahren nach Anspruch 11, dadurch gekennzeichnet, daß die Zahl der Abtastwerte pro Periode des Testsignals gemäß der erforderlichen Signalgenauigkeit von der Grundfrequenz des Testsignals in dem Sinn variiert wird, daß wegen der höheren Genauigkeitsanforderung bei tiefen Frequenzen dort eine höhere Anzahl von Abtastwerten (Stützstellen) vorgesehen wird.

16. Verfahren nach einem der vorhergehenden Ansprüche, dadurch gekennzeichnet, daß aus den Formpegeln eines Prüflings die Energien des verzerrten und des unverzerrten Anteils des Ausgangssignals bestimmt werden, daß die Gesamtenergien gebildet und auf die Gesamtenergien eines Bezugssystems, z.B. des Originals oder eines anderen Referenzsystems bezogen werden, und daß anschließend durch Quadrierung dieser jeweiligen Energieverhältnisse unmittelbar das Verhältnis bestimmt wird, in welchem die subjektive Qualitätsbewertung des Prüflings im Verhältnis zur Qualitätsbewertung der gewählten Referenz hinsichtlich der Klanghomogenität, der Durchsichtigkeit und der Ortbarkeit steht.

17. Verfahren nach Anspruch 9, dadurch gekennzeichnet, daß das Testsignal aus der Grundwelle und den beiden Harmonischen mit dem zweifachen und dreifachen Wert der Grundfrequenz besteht, und daß die Harmonischen so gegegenüber der Grundwelle in der Phase verschoben sind, daß sich in bestimmten Zeitpunkten die Maxima der Komponenten gerade zu einem Gesamtmaximum arithmetisch addieren, um die Verzerrungen gut sichtbar zu machen.

18. Verfahren nach einem der vorhergehenden Ansprüche, dadurch gekennzeichnet, daß die einzelnen Komponenten des Testsignales derart phasenverschoben sind, daß sie in bestimmten Zeitpunkten die Minima der Komponenten zu einem Gesamtminimum arithmetisch addieren, um diese Verzerrungen optisch sichtbar zu machen.

19. Verfahren nach einem der vorhergehenden Ansprüche, dadurch gekennzeichnet, daß zur zusätzlichen Bestimmung nichtlinearer Verzerrungen Differenztonmessungen mit mindestens zwei Frequenzen (f0, f0') vorgenommen werden, die miteinander über einen Proportionalitätsfaktor K verbunden sind, wobei die Testsignale über mehrere Perioden ausgesandt werden und anschließend in einer Fourier-Analyse zur Bestimmung der Differenztöne und Klirrfaktoren ausgewertet werden.

20. Vorrichtung zur Durchführung des Verfahrens nach einem der Ansprüche 1 bis 16, dadurch gekennzeichnet, daß ein Rechner zur Erzeugung eines Testsignals vorgesehen ist, mit dem ein Sendespeicher zur Abspeicherung des der elektroakustischen Übertragungsstrecke (Lautsprecher) zugeführten Testsignals und ein Empfangsspeicher zur Abspeicherung des aufgenommenen Ausgangssignals der elektroakustischen Übertragungsstrecke zusammenarbei tet, und daß ein Rechenspeicher zur Ablage und Behandlung der Formpegel vorgesehen ist.

21. Vorrichtung nach Anspruch 20, dadurch gekennzeichnet, daß die Vorrichtung auch für eine Differenzton-bzw. Klirrfaktormessung mit zwei über einen Proportionalitätsfaktor (K) miteinander verbundenen Grundfrequenzen (f0, f0') eingesetzt wird, und daß im Rechner eine Fourrier-Anayse zur Bestimmung der Differenztöne und Klirrfaktoren vorgenommen wird.

OUT

$U_1$    $U_2$

$L_F = 20 \lg \dfrac{\tilde{D}}{\tilde{U}_1}$ Formpegel (bei harm. Signalen)

$L_C = 20 \lg |r|$ Korrelationspegel

$U_H$ Harm. Signale (kontinuierlich bzw. getastet)

Normierung von $U_2$ auf

1.) gleichen Effektivwert wie $U_1$

2.) gleiche Effektivwerte der

    Grundschwingungen in $U_2$ und $U_1$

Fig. 1

0 284 077

KLAVIER        PANFLÖTE        CELLO

0 284 077

Fig. 2

-39dB

$L_F$

-36dB

α=0%/oct

-15,8dB

-8,7dB

α=30%/oct

-12,4dB

-4,8dB

α=50%/oct

-13,0dB

-0,8dB

α=70%/oct

Modellfunktionen

$F_\Delta$

$F_3 = \sin\omega t - 0,3\cos 2\omega t$
$\phantom{F_3 =} -0,6\sin 3\omega t$

Fig. 3

Fig. 4a

Fig. 4b

-LFd/dB Terzgemittelter Dauerton-Formpegel (Bestwerte) triang010

a)

-LFd/a9 Terzgemittelter Dauerton-Formpegel (Bestwerte) lautsprecher 3

c)

-LFd/dB Terzgemittelter Dauerton-Formpegel (Bestwerte) lautsprecher 2

b)

-LFd/dB Terzgemittelter Dauerton-Formpegel (Bestwerte) lautsprecher 4

d)

Fig. 5a,b,c,d

0 284 077

-LFd/dB Terzgemittelter Dauerton-Formpegel (Bestwerte) triang55

a)

-LFd/dB Terzgemittelter Dauerton-Formpegel (Bestwerte) tri22

b)

Fig. 6a,b

a) stationäres Signal

b) nichtstationäres Signal

4 Takte Sinus Puls

2 Takte

c)

d) $F_3 = \sin\omega t - 0{,}3\cos 2\omega t - 0{,}6\sin 3\omega t$

Fig. 7a,b,c,d

## Lautsprecherbeurteilung und -messung

| realer | idealer | Lautsprecher für |
|---|---|---|
| Lautsprecher | Lautsprecher | verzerrten Signal- |
| | (Original) | anteil· |

$$E_{real} = E_{orig.} + E_{verz.}$$

$$\frac{E_{real}}{E_{orig.}} = 1 + \frac{E_{verz.}}{E_{orig.}} = E'_{real} = 1 + E'_{verz.}$$

$E_{orig.}$  akustische Energie des unverzerrten Signals

$E_{verz.}$  akustische Energie des verzerrten Signalanteils
bzw. des Korrektursignals

## Vergleich

$$\frac{E'_{real1}}{E'_{real2}} = \frac{(1 + E'_{verz.1})}{(1 + E'_{verz.2})}$$

$$\frac{H_1}{H_2} = f\left(\frac{E'_{real2}}{E'_{real1}}\right)$$

H  Bewertungsgröße

Fig. 8a

| | Bewertung H | Messung $L_s$/dB | $E'_{real}$ |
|---|---|---|---|
| $L_1$ | 9,0 | −13,0 | 1,05 |
| $L_2$ | 6,8 | −7,0 | 1,2 |
| $L_3$ | 4,0 | −4,5 | 1,355 |
| $L_4$ | 6,8 | −4,5 | 1,355 |
| $L_5$ | 3,4 | −1,0 | 1,794 |
| | H±10% | ±0,5dB | (Toleranzen) |

$$\frac{H_2}{H_1} = \left(\frac{E'_{real1}}{E'_{real2}}\right)^2$$  Experimentell gefundener Zusammenhang

Hörversuch

Fig. 8b

0 284 077

Messaufbau zur Bestimmung des Formpegels und
klassischer Daten bei stationären und
nichtstationären Signalen

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | JOURNAL OF AUDIO ENGINEERING SOCIETY, Band 28, Nr. 4, April 1980, Seiten 250-258, New York, US; S. LINKWITZ: "Shaped tone-burst testing" * Zusammenfassung * --- | 1 | H 04 R 29/00 |
| A | US-A-3 922 506 (FRYE) --- | | |
| D,A | DE-A-2 837 130 (SCHERER) --- | | |
| D,A | JOURNAL OF THE AUDIO ENGINEERING SOCIETY, Band 33, Nr. 1/2, Januar-Februar 1985, Seiten 2-32, New York, US; F.E. TOOLE: "Subjective measurements of loudspeaker sound quality and listener performance" --- | | |
| D,A | JOURNAL OF THE AUDIO ENGINEERING SOCIETY, Band 33, Nr. 1/2, Januar-Februar 1985, Seiten 33-53, New York, US; A. GABRIELSSON et al.: "Perceived sound quality of high-fidelity loudspeakers" ----- | | RECHERCHIERTE SACHGEBIETE (Int. Cl.4) H 04 R |

Der vorliegende Recherchenbericht wurde für alle Patentansprüche erstellt

| Recherchenort | Abschlußdatum der Recherche | Prüfer |
|---|---|---|
| DEN HAAG | 05-07-1988 | HOORNAERT W. |